(19) **Europäisches Patentamt / European Patent Office / Office européen des brevets**

(11) **EP 1 678 272 B1**

(12) **EUROPEAN PATENT SPECIFICATION**

(45) Date of publication and mention
of the grant of the patent:
**23.05.2007 Bulletin 2007/21**

(21) Application number: **04791748.9**

(22) Date of filing: **25.10.2004**

(51) Int Cl.:
**C09K 11/06** *(2006.01)*    **C08L 57/00** *(2006.01)*

(86) International application number:
**PCT/IB2004/003513**

(87) International publication number:
**WO 2005/042637 (12.05.2005 Gazette 2005/19)**

(54) **POLYMERIC MIXTURE COMPRISING A POLYFLUORENE DERIVATE AND USE THEREOF AS OPTICAL DEVICE**

POLYMERE MISCHUNG MIT POLYFLUORENDERIVAT UND VERWENDUNG DAVON ALS OPTISCHE VORRICHTUNG

MELANGE POLYMERE COMPRENANT UN DERIVE DE POLYFLUORENE ET SON UTILISATION COMME DISPOSITIF OPTIQUE

(84) Designated Contracting States:
**AT BE BG CH CY CZ DE DK EE ES FI FR GB GR HU IE IT LI LU MC NL PL PT RO SE SI SK TR**

(30) Priority: **31.10.2003 IT MI20032110**

(43) Date of publication of application:
**12.07.2006 Bulletin 2006/28**

(73) Proprietor: **Politecnico Di Milano**
**20133 Milano (IT)**

(72) Inventors:
• **LANZANI, Guglielmo**
**I-20127 Milano (IT)**

• **VIRGILI, Tersilla**
**I-20100 Milano (IT)**
• **MARINOTTO, Daniele**
**I-20051 Limbiata (IT)**

(74) Representative: **Cattaneo, Elisabetta et al**
**Perani Mezzanotte & Partners**
**Piazza San Babila 5**
**20122 Milano (IT)**

(56) References cited:
**EP-A- 1 205 772**       **WO-A-03/007395**
**US-A- 5 633 331**

**Description**

This invention relates to a polymer mixture of a polymer which is transparent at a wavelength of at least 300 nm and a fluorene polymer for use as an optical material. In particular, it relates to use of such material as an optical switching device.

It is known that a polymer which is transparent to a particular wavelength corresponds to a polymer which has good ability to transmit light with weak absorption phenomena.

Polymethylmethacrylate, abbreviated as PMMA, is an acrylic olefin polymer having high transparency and having a good ability to transmit light. Because of its specific properties, PMMA has hitherto been used for many years as a basic constituent for plastics fibre optics and in general is commonly used as an inert base material in optical applications.

Polyfluorene, a polymer material which is also transparent within the visible range, is a polycyclic aromatic hydrocarbon known for its optical emission properties in the visible when excited. In the solid state such a polymer has long chains of carbon atoms with conjugated bonds and is characterised by strong intermolecular and intramolecular interactions which govern the absorption and emission capabilities of the final polymer material. For example, the use of polyfluorene in the solid state in optical devices, such as blue LEDs, is known.

Within the visible range, among the various fluorene polymers, poly(9,9-dioctyl)fluorene, abbreviated to PFO, has been studied in particular, and its spectral characteristics have been described in the literature through optical photoexcitation experiments [Krabeel, B. et al., "Unified picture of the photoexcitations in phenylene-based conjugated polymers: Universal spectral and dynamical features in sub-picosecond transient absorption", Phys. Rev. B 61(12) 8501 (2000)]. In particular this shows absorption wavelengths below 400 nm, stimulated emission (SE), that is a gain band, between 440 nm and 500 nm, photo-induced absorption (PA) between 510 and 650 nm, with a peak at 580 nm, and a second photo-induced absorption between 660 and 850 nm with a peak at 780 nm. As a result of its spectral characteristics this has a photoluminescence graph when exposed to excitation which is characterised by a rather broad and therefore unstructured band, with specifically rather restricted stimulated emission.

These emission properties of fluorene polymers in the visible have on the one hand made it possible to use them in devices of the LED type, and on the other hand has prevented their use in signal production optical devices where the formation of a particular structured broad gain band in the region of interest for the device under stimulation is required.

Mixtures of polymethylmethacrylate and poly(9,9-dioctyl)fluorene have been described in the literature, specifically in the field of UV microscopy. In this case, once thin films of the mixture have been formed in initial concentrations of between 1 and 50% of PFO in PMMA using the research technique known as NSOM (UV scanning near-field optical microscopy), it has been observed that the dispersion of PFO in PMMA is inhomogeneous, separation of the two polymers predominating. No behaviour deriving from presence of the mixture has been reported. [Chappell, J. and Litzey, D.G. "Phase separation in polyfluorene-polymethylmethacrylate blends studied using UV near-field microscopy", Journal of Microscopy 209, 188-193].

Surprisingly it has been found that it is possible to obtain and characterise polymer mixtures of a transparent polymer and polyfluorene having spectral characteristics which are different from those of polyfluorene alone.

The object of this invention is therefore to provide a polymer mixture comprising polyfluorene which has a structured gain band making it possible to use it as an optically active material in the visible range.

Another object of the invention is to provide an optical material which can be used as an optical switch within the visible range.

The above objects have been accomplished through a polymer mixture of a transparent polymer and a fluorene polymer as indicated in Claim 1. Where the density of the fluorene polymer is mentioned, the number of isolated chains of fluorene polymer per volume unit in $cm^{-3}$ is meant. For values of such density, where the term "about" is used, this means a variability of $\pm$ 0.5 in the mantissa value. By optical device is meant a device capable of producing an optical signal. In this context by "optically active material" is meant a material which is capable of having a structured gain band corresponding to the stimulated emission band for the material in the region of interest which, in the case of this invention, is the visible region.

Further features and advantages of the invention will become apparent from the following detailed description with reference to an embodiment of the invention provided purely by way of example and without restriction and to the appended figures, in which:

Figure 1 is a graph of the spectral characteristics of the mixture according to the invention (-■-) and PFO in the solid state (----),
Figure 1a is a graph of the luminescence of the mixture according to the invention (-■-) and PFO in the solid state (----),
Figure 2 is a graph of the photo-induced anisotropy of the mixture according to the invention, and
Figure 2a is a graph of the photo-induced anisotropy of PFO in the solid state, and

Figure 3 is a graph showing the normalised transmission curve for the material according to the invention in a 3-pulse experiment.

The invention therefore relates to a mixture comprising a polymer which is transparent at a wavelength of more than 300 nm and poly(9,9-XY-fluorene), wherein X and Y are each separately a straight or branched $C_1$-$C_{12}$ saturated or unsaturated hydrocarbon chains and the said poly(9,9-XY-fluorene) is substantially dispersed as isolated chains having an isolated chain density in the said transparent polymer of a maximum of $1 \times 10^{19}$ cm$^{-3}$.

Preferably X and Y are separately a straight $C_1$-$C_{12}$ saturated hydrocarbon chain, more preferably $C_6$-$C_9$, and even more preferably they are two equally saturated straight alkyl chains.

In accordance with a preferred embodiment, X and Y are two octyl chains, in which the poly(9,9-XY-fluorene) is PFO (poly(9,9-dioctylfluorene)).

The said transparent polymer may be a polymer which is transparent in a range from 300 nm to 900 nm, and even more preferably from 320 to 750 nm. It may be selected from the group comprising polymethylmethacrylate, polystyrene, polycarbonate, and preferably it is PMMA.

Without wishing to be bound by any theory, the mixture according to the invention has proved to be optically active in the visible region in accordance with the objects of the invention solely through the presence of the fluorene polymer in isolated chains. It is therefore felt that the conjugation of the double bonds in the absence of inter-chain interactions, typical of fluorene material in the solid state, is responsible for the stimulated emission spectrum which is different from that obtained from the conjugation which is disturbed by intermolecular interactions as will be demonstrated in detail below.

Because polymerisation of the two polymers is not desired, the mixture according to the invention may be prepared by directly mixing the two component polymers in the solid state, at room temperature and pressure, in a suitable inert solvent, or the two polymers may first be changed into the liquid state and then mixed. Once a clear solution has been obtained the solvent is removed. Preferably the two polymers are added in a (polyfluorene): (polymer transparent at wavelengths above 300 nm) ratio of 1:10.

In a further aspect the invention also relates to a solid optically active polymer material of the mixture according to the invention.

Preferably the said optically active solid material is a film of the mixture according to the invention. Even more preferably it is a thin film having a thickness of less than 1 $\mu$m which has a gain band between 450 and 610 nm with a maximum gain of 2500 db/cm. In a further aspect the invention also relates to use of such optically active polymer material as a switching device according to Claim 17. Preferably for this purpose the optically active polymer material is in the form of a polymer film of the mixture and has a gain modulation of about 100 nm between 530 and 610 nm.

The invention will now be described in detail with reference to an example of the preparation of a solid polymer film and a number of tests to evaluate the optical characteristics of the material, as well as an experimental test for evaluating the optical material as an optical switch. The preparation example and the experimental tests are provided by way of an example of the invention and must not in any way be interpreted as restricting the invention.

Example 1

50 mg of polymethylmethacrylate and 5 mg of poly(9,9-dioctylfluorene) and 1,2 ml of toluene were placed in a glass vial in sequence. The compounds were added at room temperature and pressure. The solution was then heated to a temperature below the boiling point of toluene in order to dissolve the solids completely. Once the solution was clear it was deposited onto a glass substrate using the drop cast technique, which comprises deposition of the mixture in the liquid phase onto the substrate by dropwise addition of the solution and evaporation of the solvent, in this case toluene, in a closed environment, for example a glass bell, to avoid external contamination.

A polymer film having a thickness of about 1 $\mu$m was thus obtained.

This film was then subjected to a number of experiments in order to demonstrate its optical properties.

Example 2: Investigation of the spectral characteristics of the optical material

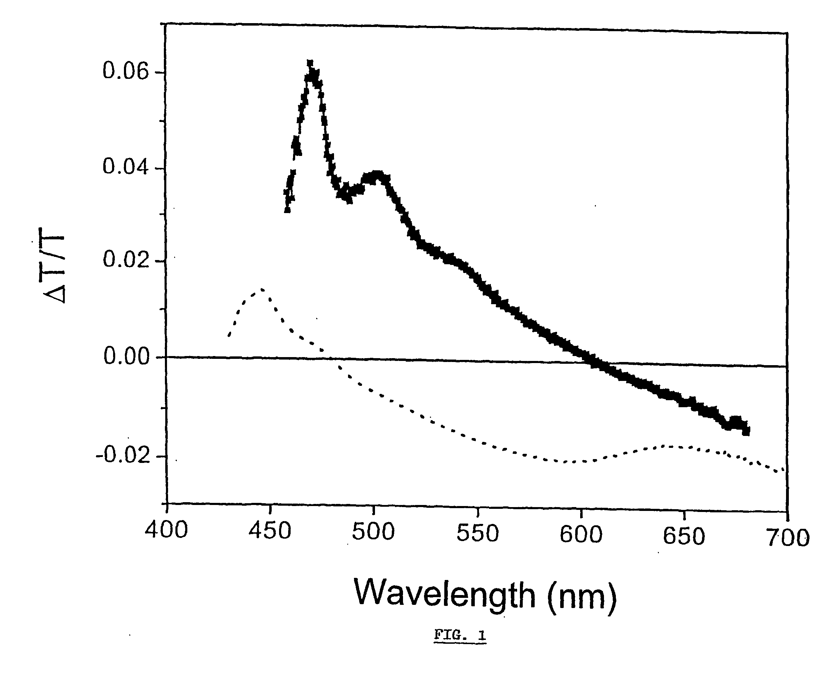

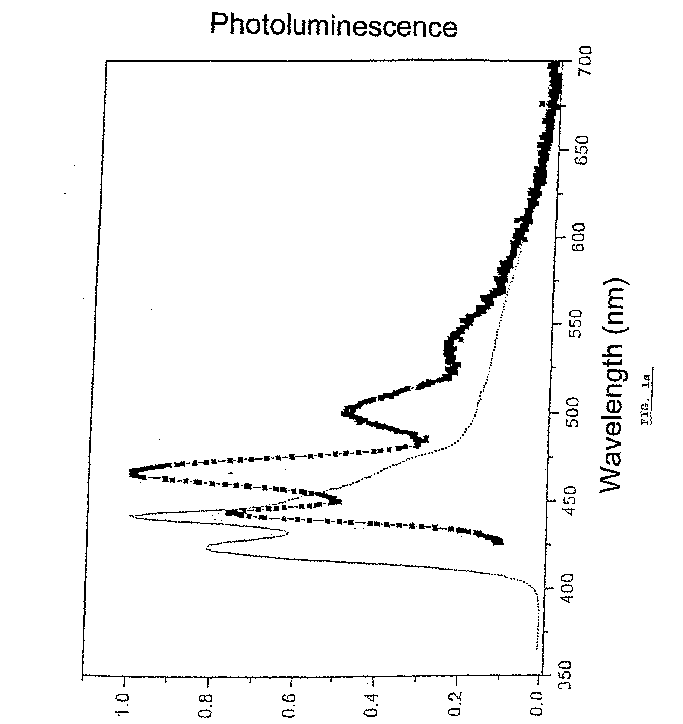

The solid film obtained in Example 1 was subjected to a conventional pump-probe experiment [Lanzani, G. et al., "Photophysics of methyl-substituted poly(para-phenylene)-type ladder polymers) in Semiconducting Polymers - Chemistry, Physics and Engineering, P. Van Hutten, Wiley-VCH, Weinheim, 235 (2000)]. In this technique the sample was excited by two different pulses - a less intense probe pulse and the other a very intense pump pulse to evaluate the normalised transmission of the probe in the presence or absence of the pump pulse. The film was therefore subjected to two pulses in the absorption band for solid PFO, the first pump pulse corresponding to 390 nm and the second probe pulse corresponding to continuous white light (440-1000 nm), with a probe delay of 2 ps. The (-■-) curve in the graph in Figure 1 was obtained, where wavelength is shown as the abscissa and the transmission value of the standard probe

($\Delta T/T_{withoutpump}$) is shown as the ordinate, where $\Delta T$ is $T_{pump}$ - $T_{withoutpump}$. With reference to Figure 1, the material according to the invention had a very wide structured SE band from 430 to 610 nm with peaks at 470 nm, 500 nm and 540 nm, with the onset of photo-induced absorption at 680 nm. This was then compared with the (----) curve generated by PFO in the solid state, and the gain band of the polymer film in the visible region from 450 nm to 610 nm was obvious. As indicated above, broadening of the gain band in the stimulated emission region corresponding to visible wavelengths demonstrated the advantageous optical properties of the material according to the invention, which is therefore described as an "optically active" material.

The gain (g) for a film of thickness d was obtained directly by pump-probe measurements. The following relationship was used in order to obtain the measurement in decibels (db):

$$g(db) = 10 \log_{10}\left(\frac{\Delta T}{T} + 1\right)$$

The $\Delta T/T$ values were obtained from the graph in Figure 1 and the various gain values were extrapolated. Three examples of gain values corresponding to three different values of $\Delta T/T$ are shown in the table below:

| Wavelength | Gain |
|---|---|
| 450 nm | 2500 db/cm |
| 530 nm | 860 db/cm |
| 610 nm | 0 db/cm |

The density of the isolated chains was then estimated, and this was defined as No. This was estimated by pump-probe measurements made on the sample using the following procedure. The following formula was used to calculate $N_1$, corresponding to the number of excited states.

$$\Delta T/T = \sigma_{1-n}N_1 d$$

where $\sigma_{1-n} = 1.4 \times 10^{-16}$ cm$^2$ is the impact cross-section of the $S_1$ - $S_n$ transition (from the first to the nth state of the excited singlet), and

d = 1 $\mu$m, and is the film thickness.

The value of $\Delta T/T$ at 680 nm, corresponding to the $S_1$ - $S_n$ transition, was obtained from the $\Delta T/T$ spectrum shown in Figure 1, and this was equal to about 0.012. Thus using the formula above the value of $N_1$ was obtained, and this was equal to about 8xE+17 cm$^{-3}$. The density of the isolated chains in the fundamental state, N0, was calculated from the following formula

$$N_0 = N_1/(F \times \sigma_{0-1})$$

where $\sigma_{0-1} = 6 \times 10^{-16}$ cm$^2$ is the transverse cross-section of the So - $S_1$ transition (from the fundamental state to the first excited state of the singlet), and

F($3 \times 10^{+14}$ cm$^{-2}$) is the photon flow per excitation pulse and $N_1$ and No have the meanings given above.

Therefore making the substitutions, in the example at 680 nm, a density of about 5x10$^{+18}$ cm$^{-3}$ was obtained.

The experiment was repeated with other values of $\Delta T/T$ and density values within the range from about $1 \times 10^{18}$ and about $6 \times 10^{18}$ cm$^{-3}$ were obtained.

The photoluminescence spectrum of the optical material according to the invention (-■-) was also measured and shown in Figure 1a and this was compared with the spectrum for PFO (----). As will be seen from Figure 1a, the material according to the invention had a more structured spectrum than the spectrum of PFO alone, which was less well-defined.

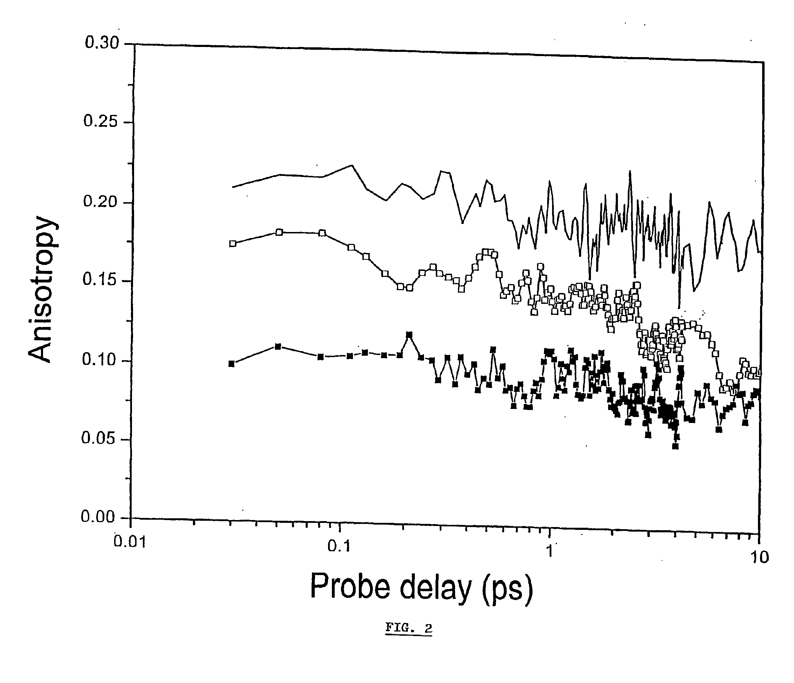

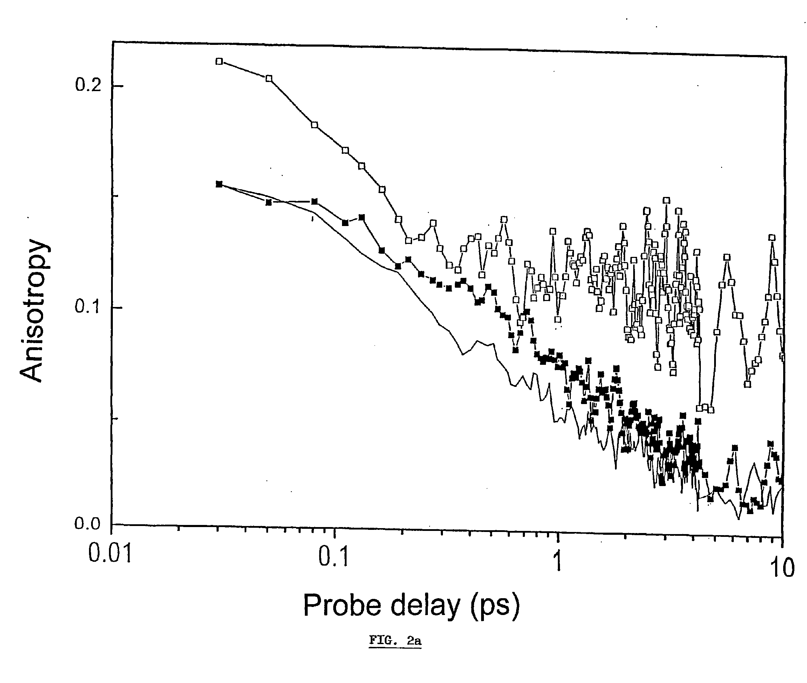

In confirmation of the fact that the optical properties of the optical material according to the invention are clearly different from those of PFO, in the course of performing the pump-probe experiment, photo-induced anisotropy was also measured using conventional techniques. The results are shown in Figure 2 (for the material according to the invention) and in Figure 2a (for PFO), where anisotropy is shown as the ordinate and time as the abscissa. The evaluation was performed at wavelengths of 680 nm ( __ ), 470 nm (-■-) and 560 nm (-□-). As will be seen from the appended figures, the anisotropy of the material according to the invention at different points in the visible spectrum was constant over time in comparison with PFO in the solid state, which quickly lost its polarisation when subjected to excitation.

The surprising optical results for the material according to the invention, which having a gain band in the visible finds application as an optically active material at those wavelengths, are clear from the examples above.

Example 3: 3-pulse experiment

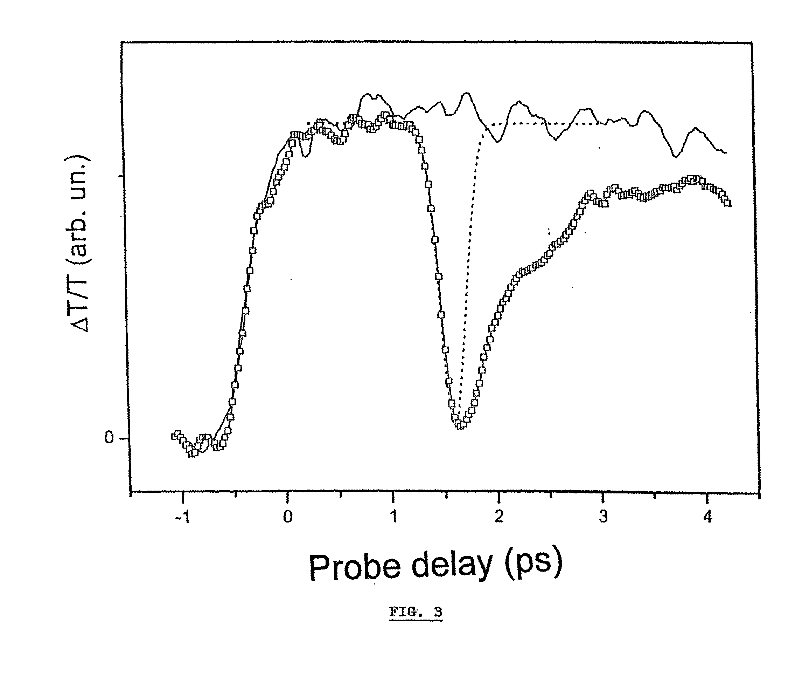

The film obtained according to Example 1 was subjected to a 3-pulse experiment. This test comprises repeating the two probe-pump pulse experiments described above and adding a further signal described as a push signal. The polymer film was therefore subjected to the following three signals - a pump signal at 390 nm, a probe signal at 590 nm and a push signal at 780 nm. The push signal was introduced about 1.5 ps after the pump signal. Normalised transmission ($\Delta T/T_{withoutpump}$) of the probe signal (-□-) is shown in the graph in relation to the probe delay, as shown in Figure 3. The curves for normalised transmission in the two pulse experiment ( __ ) and the push signal (----) are also indicated. With reference to the transition curve for the probe signal in the two pulse experiment ( __ ) it will be seen that this overlaps the push signal curve (----). Analysing the progress of the transmission curve for the probe (-□-), the sum of the effects of these two signals brought about instantaneous cancellation of the positive gain signal after about 2 ps, which subsequently increased again, although with a normalised transmission which was less than the probe transmission in a two pulse experiment ( __ ). The surprising result of having a gain which was cancelled out when a further pulse was applied has suggested use of the polymer material according to the invention as an optical switch. Switching occurred in a narrower band of about 100 nm, from 530 nm to 610 nm. Because the recovery kinetics found were completed in about 2 ps, optical modulation operated at a frequency of 300 GHz. Without wishing to be bound by any theory, the behaviour of the optical switch was explained by assuming that the third push pulse separated the excited states of the fluorene into a single chain forming charges. The absorption signal from the latter therefore completely cancelled out the gain signal (stimulated emission band) and with recombination of the charges the gain signal of course reappeared.

From the experiments described in Example 2 and Example 3 in combination with Figures 1 and 3 it is clear that the surprising formation of a well-structured gain band in the visible means that the mixture according to the invention can be used as an effective fast optical device. In particular this invention makes it possible to design optical switches, and also electro-optical switches through applying an electrical field capable of generating charges which cancel out the gain signal only instantaneously to the optical device of the polymer mixture with isolated polyfluorene chains.

**Claims**

1. Polymer mixture comprising a polymer which is transparent at a wavelength greater than 300 nm and poly(9,9-XY-fluorene), wherein X and Y are each separately a straight or branched saturated or unsaturated $C_1$-$C_{12}$ hydrocarbon chain and the said poly(9,9-XY-fluorene) is substantially dispersed as isolated chains, having an isolated chain density within the said transparent polymer of not more than $1\times10^{19}$ cm$^{-3}$.

2. Mixture according to Claim 1, wherein the said density of isolated chains in the said transparent polymer lies within the range from $1\times10^{17}$ to $8\times10^{18}$ cm$^{-3}$.

3. Mixture according to Claim 2, wherein the said density of isolated chains in the said transparent polymer is $5\times10^{18}$ cm$^{-3}$.

4. Mixture according to any of Claims 1-3, wherein X and Y are independently of each other a straight saturated $C_1$ - $C_{12}$ chain.

5. Mixture according to Claim 4, wherein X and Y are independently of each other a straight saturated $C_6$ - $C_9$ chain.

6. Mixture according to Claim 5, wherein X and Y are two identical alkyl chains.

7. Mixture according to Claim 6, wherein X and Y are identical, and are octyl chains.

8. Mixture according to any of the preceding claims wherein the said transparent polymer transmits light within a range from 300 nm to 900 nm.

**9.** Mixture according to Claim 8, wherein the transmission range of the transparent polymer is from 320 to 750 nm.

**10.** Mixture according to any of claims from 1 to 7, wherein the transparent polymer is selected from the group comprising polymethylmethacrylate, polystyrene, polycarbonate.

**11.** Mixture according to Claim 10, wherein the transparent polymer is polymethylmethacrylate.

**12.** Process for the preparation of a mixture according to any of claims from 1 to 11, comprising the steps of:

a) mixing a polymer which is transparent at a wavelength of at least 300 nm, poly(9,9-XY-fluorene) and an inert solvent, and
b) removing the solvent,

where X and Y are independently of each other a straight or branched saturated or unsaturated $C_1$- $C_{12}$ hydrocarbon chain.

**13.** Process according to Claim 12, wherein step a) takes place at room temperature and pressure.

**14.** Process according to Claim 12 or 13, wherein the step of mixing between the said transparent polymer and the said poly(9,9-XY-fluorene) takes place in a ratio of 10 to 1.

**15.** Optically active solid material of the polymer mixture according to any of Claims 1 to 11.

**16.** Material according to Claim 15, in which the material is a polymer film.

**17.** Material according to Claim 15 or 16, in which the gain band is from 450 to 610 nm with a maximum gain of 2500 db/cm.

**18.** Use of the material according to any of claims from 15 to 17 as an optical switch.

**19.** Use according to Claim 18, in which the material provides switching of the gain of 100 nm and a frequency of 300 GHz.

**Patentansprüche**

**1.** Polymergemisch, umfassend ein Polymer, welches bei einer Wellenlänge größer als 300 nm transparent ist und Poly(9,9-XY-fluoren), wobei X und Y jeweils separat eine unverzweigte oder verzweigte gesättigte oder ungesättigte $C_1$-$C_{12}$ Kohlenwasserstoffkette sind und das Poly(9,9-XY-fluoren) im Wesentlichen als isolierte Ketten dispergiert ist und eine isolierte Kettendichte in dem transparenten Polymer von nicht mehr als $1\times10^{19}$ cm$^{-3}$ aufweist.

**2.** Gemisch gemäß Anspruch 1, wobei die Dichte isolierter Ketten im transparenten Polymer im Bereich von $1\times10^{17}$ bis $8\times10^{18}$ cm$^{-3}$ liegt.

**3.** Gemisch gemäß Anspruch 2, wobei die Dichte isolierter Ketten im transparenten Polymer $5\times10^{18}$ cm$^{-3}$ beträgt.

**4.** Gemisch gemäß irgendeinem der Ansprüche 1 bis 3, wobei X und Y unabhängig voneinander eine gesättigte $C_1$-$C_{12}$ Kette sind.

**5.** Gemisch gemäß Anspruch 4, wobei X und Y unabhängig voneinander eine gesättigte $C_6$-$C_9$ Kette sind.

**6.** Gemisch gemäß Anspruch 5, wobei X und Y zwei identische Alkylketten sind.

**7.** Gemisch gemäß Anspruch 6, wobei X und Y identisch sind und Octylketten sind.

**8.** Gemisch gemäß irgendeinem der vorhergehenden Ansprüche, wobei das transparente Polymer Licht in einem Bereich von 300 nm bis 900 nm transmittiert..

**9.** Gemisch gemäß Anspruch 8, wobei der Transmissionsbereich des transparenten Polymers von 320 bis 750 nm liegt.

10. Gemisch gemäß irgendeinem der Ansprüche 1 bis 7, wobei das transparente Polymer aus der Gruppe ausgewählt ist, umfassend Polymethlymethacrylat, Polystyrol, Polycarbonat.

11. Gemisch gemäß Anspruch 10, wobei das transparente Polymer Polymethylmethacrylat ist.

12. Verfahren zur Herstellung eines Gemischs gemäß irgendeinem der Ansprüche 1 bis 11, umfassend die Schritte:

   a) Mischen eines Polymers, dass bei einer Wellenlänge von mindestens 300 nm transparent ist, Poly(9,9-XY-fluoren) und einem inerten Lösungsmittel, und
   b) Entfernen des Lösungsmittels

wobei X und Y unabhängig voneinander eine unverzweigte oder verzweigte gesättigte oder ungesättigte $C_1$-$C_{12}$ Kohlenwasserstoffkette sind.

13. Verfahren gemäß Anspruch 12, wobei Schritt a) bei Raumtemperatur und -druck stattfindet.

14. Verfahren gemäß Anspruch 12 oder 13, wobei der Schritt des Mischens zwischen dem transparenten Polymer und Poly(9,9-XY-fluoren) in einem Verhältnis von 10 zu 1 stattfindet.

15. Optisch aktives festes Material des Polymergemischs gemäß irgendeinem der Ansprüche 1 bis 11.

16. Material gemäß Anspruch 15, wobei das Material eine Polymerfolie bzw. Polymerschicht ist.

17. Material gemäß Anspruch 15 oder 16, wobei das Verstärkungsband von 450 bis 610 nm reicht, mit einer Maximalverstärkung von 2500 db/cm.

18. Verwendung des Materials gemäß irgendeinem der Ansprüche 15 bis 17 als optischer Schalter.

19. Verwendung gemäß Anspruch 18, wobei das Material Schalten der Verstärkung von 100 nm und einer Frequenz von 300 GHz bereitstellt.


**Revendications**

1. Mélange de polymères comprenant un polymère qui est transparent à une longueur d'onde de plus de 300 nm et un poly(9,9-XY-fluorène), dans lequel X et Y représentent chacun séparément une chaîne hydrocarbonée en $C_1$-$C_{12}$ linéaire ou ramifiée, saturée ou insaturée, et ledit poly(9,9-XY-fluorène) est principalement dispersé sous la forme de chaînes isolées ayant une densité de chaînes isolées dans ledit polymère transparent de pas plus de $1 \times 10^{19}$ cm$^{-3}$.

2. Mélange selon la revendication 1, dans lequel ladite densité de chaînes isolées dans ledit polymère transparent est dans la plage de $1 \times 10^{17}$ à $8 \times 10^{18}$ cm$^{-3}$.

3. Mélange selon la revendication 2, dans lequel ladite densité de chaînes isolées dans ledit polymère transparent est de $5 \times 10^{18}$ cm$^{-3}$.

4. Mélange selon l'une quelconque des revendications 1 à 3, dans lequel X et Y représentent indépendamment l'un de l'autre une chaîne linéaire saturée en $C_1$-$C_{12}$.

5. Mélange selon la revendication 4, dans lequel X et Y représentent indépendamment l'un de l'autre une chaîne linéaire saturée en $C_6$-$C_9$.

6. Mélange selon la revendication 5, dans lequel X et Y représentent deux chaînes alkyle identiques.

7. Mélange selon la revendication 6, dans lequel X et Y sont identiques et sont des chaînes octyles.

8. Mélange selon l'une quelconque des revendications précédentes, dans lequel ledit polymère transparent transmet la lumière dans une plage de 300 nm à 900 nm.

9. Mélange selon la revendication 8, dans lequel la plage de transmission du polymère transparent est de 320 à 750 nm.

10. Mélange selon l'une quelconque des revendications 1 à 7, dans lequel le polymère transparent est choisi parmi le groupe comprenant le polyméthacrylate de méthyle, le polystyrène et un polycarbonate.

11. Mélange selon la revendication 10, dans lequel le polymère transparent est le polyméthacrylate de méthyle.

12. Procédé pour la préparation d'un mélange selon l'une quelconque des revendications 1 à 11, comprenant les étapes consistant à :

   a) mélanger un polymère qui est transparent à une longueur d'onde d'au moins 300 nm, un poly(9,9-XY-fluorène) et un solvant inerte, et
   b) éliminer le solvant,

   X et Y représentant chacun indépendamment une chaîne hydrocarbonée en $C_1$-$C_{12}$ linéaire ou ramifiée, saturée ou insaturée.

13. Procédé selon la revendication 12, dans lequel l'étape a) est effectuée à température et sous pression ambiantes.

14. Procédé selon la revendication 12 ou 13, dans lequel l'étape de mélange dudit polymère transparent et dudit poly(9,9-XY-fluorène) est effectuée à un rapport de 10 à 1.

15. Matériau solide optiquement actif constitué du mélange de polymères selon l'une quelconque des revendications 1 à 11.

16. Matériau selon la revendication 15, dans lequel le matériau est un film de polymère.

17. Matériau selon la revendication 15 ou 16, dans lequel la bande de gain est de 450 à 610 nm avec un gain maximum de 2500 db/cm.

18. Utilisation du matériau selon l'une quelconque des revendications 15 à 17 en tant que commutateur optique.

19. Utilisation selon la revendication 18, dans laquelle le matériau procure une commutation du gain à 100 nm et une fréquence de 300 GHz.

FIG. 1

FIG. 1a

FIG. 2

FIG. 2a

FIG. 3